# EUROPÄISCHE PATENTANMELDUNG

(11) **EP 2 466 882 A1**
(43) Veröffentlichungstag der Anmeldung: **20.06.2012**
(21) Anmeldenummer: 11009939.7
(22) Anmeldetag: 17.12.2011
(51) Int. Cl.: H04N 7/10, H03G 3/20

(54) **Verteilungssystem für ein Telekommunikationsnetz**

(30) Priorität: 20.12.2010 ES 201001605; 10.01.2011 ES 201100025
(71) Anmelder: Televés, S.A., 15706 Santiago de Compostela (ES)
(72) Erfinder: Lopez Arca, Gumersindo, 15706 Santiago de Compostela (ES); Fernandez Carnero, José Luis, 15706 Santiago de Compostela (ES); Rodal Perez, Justo, 15706 Santiago de Compostela (ES)
(74) Vertreter: Dosterschill, Peter

(57) **Zusammenfassung**

Die Erfindung betrifft ein Verteilungssystem für ein Telekommunikationsnetz, insbesondere ein MATV/SMATV-Netz, das Telekommunikationssignale an Benutzersteckdosen (12), insbesondere Steckdosen für den Anschluss eines Fernseh-, Video- und/oder Decoder-Gerät (TUS) überträgt, wobei das Verteilungssystem wenigstens ein Verteilungselement (1) mit einer elektronischen Schaltung (4) aufweist.

Erfindungsgemäß ist vorgesehen, dass die elektronische Schaltung (4) des Verteilungselements (1) einen Verstärker (6) aufweist, der Telekommunikationssignale des Telekommunikationsnetzes verstärkt.

## Beschreibung

Die vorliegende Erfindung betrifft ein Verteilungssystem für ein Telekommunikationsnetz nach dem Oberbegriff des Patentanspruchs 1.

Es sind bereits MATV/SMATV-Netze bekannt, das heißt Gemeinschaftsnetze für den Empfang, die Bearbeitung von Signalen terrestrischen Fernsehens und Satellitenfernsehens erlauben, und die mittels einer gemeinsamen Schaltungseinrichtung die Übertragung der Signale bis zu den Empfangsgeräten der Systembenutzer einer Nachbarschaftsgemeinschaft erlauben.
Diese MATV/SMATV-Netze bestehen im Wesentlichen aus einer Aufnahmeeinheit, die verschiedene Kanäle terrestrischen Fernsehens und/oder Satellitenfernsehens aufnimmt, aus einer Kopfeinheit, die die Bearbeitung, die Anpassung und die Verstärkung der empfangenen Kanäle durchführt und aus einem Verteilungsnetz, das die Signale bis zu dem Benutzer überträgt. Dieses Verteilungsnetz besteht aus Kabeln und aus Verteilungselementen.

Obwohl diese MATV/SMATV-Netze ursprünglich im Wesentlichen für Fernsehsignale geschaffen wurden, sind nun Netze für andere Typen von Telekommunikationssignale entwickelt worden, so zum Beispiel für Daten, Internet, interaktive Dienste, usw.

Das Verteilungssystem des Verteilungsnetzes eines MATV/SMATV-Netzes besteht aus Verteilungselementen, die einen Teil dieses Verteilungsnetzes darstellen.

Es existieren unterschiedliche Typen von Verteilungselementen, die der Funktion entsprechen, die sie innerhalb des Verteilungsnetzes verwirklichen. So gibt es Verteilungselemente (Verteiler), die Elemente sind, die das Signal von einem Eingang zu "n" Ausgängen führen. Sie werden im Wesentlichen für Verteilungsnetze mit mehreren Ableitungselementen benutzt. Andere Verteilungselemente sind Verteiler, die Ableitungsvorrichtungen sind, die die Funktion haben, einen Teil des Signals des Verteilungsnetzes zu extrahieren und es an einen anderen Ast oder an andere Äste des genannten Verteilungsnetzes zu übertragen. Benutzersteckdosen sind weitere Verteilungselemente, die die Funktion haben, die Verbindung zwischen dem Netz und Benutzerendgeräten (Fernseh-, Video-, Decoder-Geräte, usw.) herzustellen bzw. den Anschluss der Benutzerendgeräte an das Netz bereitzustellen.

Im Übrigen können die Verteilungselemente hinsichtlich ihrer Funktion bzw. nach dem Ort klassifiziert werden, an dem sie entweder in einem Zwischenbereich oder in Endbereichen im Verteilungsnetz einnehmen. Beispielsweise agieren Benutzersteckdosen, die ebenfalls zu den Verteilungselementen gehören, als sogenannte Endelemente, die ihr Gesamt-Eingangssignal an Benutzerendgeräte (Fernseh-, Video-, Decoder-Geräte, usw.) übergeben; diese werden mit dem Namen BAT (Bases de Acceso Terminal; Endgerätezugangsbasen) bezeichnet. Alternativ hierzu können die Verteilungselemente als Zwischenelemente fungieren, die einen Teil ihres Eingangssignals an die Benutzerendgeräte (Fernseh-, Video-, Decoder-Geräte, usw.) übergeben und einen anderen Teil des Signals an das Verteilungssystem.

Zur Zeit ist im Markt eine große Vielfalt von Verteilungselementen verfügbar; dieses haben allerdings den Nachteil, dass sie Verluste beim Empfang des Benutzersignals aufweisen, womit die Möglichkeit verringert wird, die Anzahl von Benutzerendgeräten zu erhöhen, die an das Netz angeschlossen werden, und/oder die Anzahl von Benutzersteckdosen für jeden Benutzer. Dies erfordert den Einsatz von Verstärkern, die eine Verstärkung mit einem vergleichsweise hohen Ausgangspegel liefern und damit die Kosten der Kopfeinheit im Verteilungssystem erhöhen.

Der Erfindung liegt die Aufgabe zugrunde, ein Verteilungssystem der eingangs genannten Art zu schaffen, das für eine vergleichsweise große Anzahl von Benutzerendgeräten ausgelegt ist. Weiterhin liegt der Erfindung die Aufgabe zugrunde, Verteilungselemente und Benutzersteckdosen für das Verteilungssystem bereitzustellen.

Diese Aufgabe wird durch ein Verteilungssystem gelöst, das durch die Patentansprüche definiert ist, sowie durch Verteilungselemente und Benutzersteckdosen, die ebenfalls durch die Patentansprüche definiert sind.

Die Erfindung zeichnet sich durch eine Mehrzahl von Vorteilen aus. Das erfindungsgemäße Verteilungssystem ist für eine vergleichsweise große Anzahl von Benutzerendgeräten ausgelegt.

Die im erfindungsgemäßen Verteilungssystem verwendeten Verstärker können für vergleichsweise kleine Ausgangspegel ausgelegt werden und zeichnen sich durch Kosten aus, die geringer sind als die Kosten der im Stand der Technik in Verteilungssystemen verwendeten Verstärker.

Die Erfindung betrifft unterschiedliche Typen von Verteilungselementen. Hierzu gehören unter anderem Verteiler, Ableitelemente, Koppelelemente und Benutzersteckdosen.

Die Verteilungselemente des erfindungsgemäßen Verteilungssystems weisen eine elektronische Schaltung mit einem verteilungselement-individuellen Verstärker auf. Damit lassen sich Verteilungssysteme individuell ausgestalten.

Ist beispielsweise die Pegelstärke der am Eingang des jeweiligen Verteilungssystems anliegenden Telekommunikationssignale gering, werden Verteilungselemente im Eingangsbereich des Verteilungssystems mit Verstärkern ausgestattet, so dass dem gesamten Verteilungssystem entsprechend verstärkte Eingangssignale zur Verfügung stehen.
In einem anderen Beispielsfall werden lediglich einzelne Benutzersteckdosen mit Verstärkern ausgestattet, wenn anzuschließende Benutzerendgeräte Eingangssignale höherer Pegel erfordern. Dabei ist es möglich, sonstige Verstärker im Verteilungssystem, die zum Beispiel einer Kopfeinheit einer MATV/SMATV-Netzes zugeordnet sind, für geringere Signalpegel auszulegen. Damit werden einerseits Übertragungsverluste im Verteilungssystem reduziert, zugleich erfordert diese Ausgestaltung des Verteilungssystem andererseits geringere Kosten.

Eine vorteilhafte Ausführungsform des erfindungsgemäßen Verteilungssystems ist dadurch gekennzeichnet, dass die elektronische Schaltung Mittel aufweist, die in der Weise ausgestaltet sind, dass sie die Telekommunikationssignale an die Benutzersteckdosen übertragen, sofern der Verstärker außer Funktion ist.
Diese Mittel bilden ein Durchgangs-Schaltungselement der elektronischen Schaltung, wobei das Durchgangs-Schaltungselement einen Weg niedriger Impedanz zwischen einem Eingang und einem Ausgang der elektronischen Schaltung bildet, über den die Telekommunikationssignale übertragen werden, sofern der Verstärker außer Funktion ist.
Damit wird der Vorteil erzielt, dass die Funktion des Verteilungssystems selbst dann aufrecht erhalten wird, wenn ein Verstärker eines Verteilungselements oder sogar mehrere Verstärker mehrerer Verteilungselemente außer Funktion sind (Ausfall der Speisespannung für den oder die Verstärker und/oder betriebstechnischer Ausfall des oder der Verstärker). In diesen Fällen werden die dem Verteilungssystem zugeführten Telekommunikationssignals weiterhin an die Benutzersteckdosen übertragen und stehen dort - ohne vorherige Verstärkung - zur Verfügung.

Eine weitere vorteilhafte Ausführungsform des erfindungsmäßen Verteilungssystems ist dadurch gekennzeichnet, dass der Verstärker eine automatische Gewinnsteuerung aufweist. Damit wird der Vorteil erzielt, dass die Telekommunikationssignale, die an weitere Verteilungselemente des Systems einschließlich der Benutzersteckdosen übertragen werden, mit einem vordefinierten Signalpegel zur Verfügung gestellt werden.
Zugleich verhindert die Selbstregelung des Verstärkers, der in eine Benutzersteckdose integriert ist, eine Sättigung des Eingangspegels am Benutzerendgerät, die zu einer Erhöhung des Rauschens und zu damit verbundenen Fehlers beim Empfang führen würde.

Eine weitere vorteilhafte Ausführungsform des erfindungsgemäßen Verteilungssystems ist dadurch gekennzeichnet, dass der Verstärker mit einem Benutzerendgerät verbunden ist, das dem Verstärker Speisespannung zuführt.

Eine weitere vorteilhafte Ausführungsform des erfindungsgemäßen Verteilungssystems ist dadurch gekennzeichnet, dass der Verstärker eines Verteilungselements (beispielsweise einer Benutzersteckdose) mit einer externen Speisequelle verbunden ist, die dem Verstärker Speisespannung zuführt.
Damit kann ein Benutzer zum Beispiel bei Ausfall der Spannung eines Benutzersteckdosenverstärkers in einfacher Weise die benötigte Spannung aus einer externen Spannungsquelle (z. B. Steckdose des häuslichen Stromversorgungsnetzes) dem Verstärker zuführen und somit die gewünschte Funktion des Verteilungssystem bzw. seines Endgeräts wiederherstellen.

Eine weitere vorteilhafte Ausführungsform des erfindungsgemäßen Verteilungssystems ist dadurch gekennzeichnet, dass das Benutzerendgerät mit der externen Speisequelle verbunden ist, die dem Benutzerendgerät Speisespannung zuführt.
Damit wird der Vorteil erzielt, dass ein Benutzerendgerät genutzt werden kann, um einen Verstärker im Verteilungssystem mit Speisespannung zu versorgen, so dass das System dem betreffenden Benutzerendgerät und gegebenenfalls weiteren Benutzerendgeräten Signale zur Verfügung stellt, die die Benutzerendgeräte für einen ordnungsgemäßen Betrieb benötigen. Diese Zuführung der Speisespannung kann dabei durch eine Fernbedienung eines Benutzerendgeräts ausgelöst werden.

Vorteilhafte Ausgestaltungen der Erfindung werden nun anhand der Zeichnungen beispielhaft beschrieben.

Es zeigt
- Figur 1: schematisch ein Verteilungssystem für ein Telekommunikationsnetz gemäß der Erfindung;
- Figur 2: eine perspektivische Darstellung eines Verteilungselements eines Verteilungssystems nach Figur 1;
- Figur 3: ein Blockschaltbild einer Verteilungselementschaltung;
- Figur 4: eine Benutzersteckdose; und
- Figur 5: ein Verteilungselement gemäß der Erfindung mit einer externen Speisequelle.

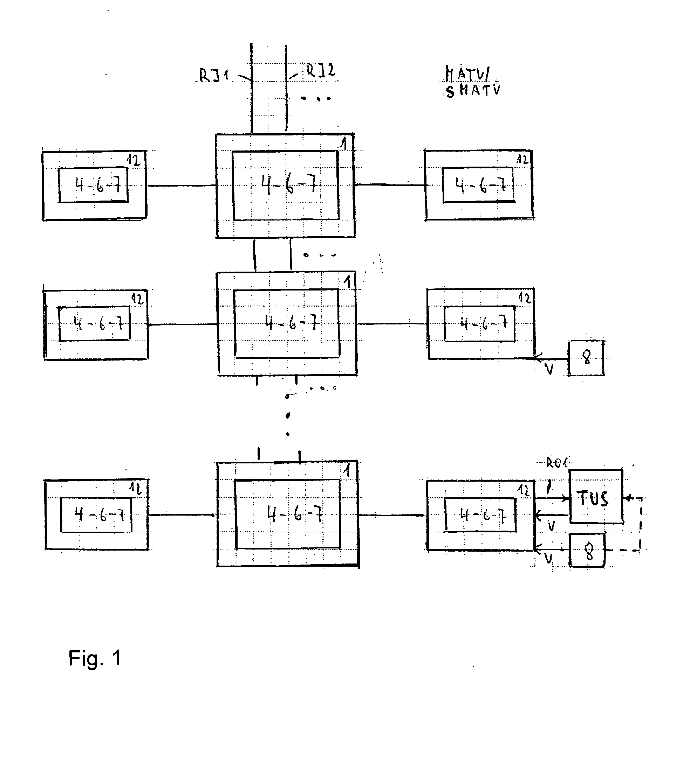

Figur 1 zeigt ein Netz, insbesondere ein MATV/SMATV-Netz mit Netzeingängen RI1, RI2, ..., über die Telekommunikationssignale beispielsweise von Antennen oder Kabeln in ein Verteilungssystem eingeführt werden.

Das in Figur 1 dargestellte Verteilungssystem enthält eine Mehrzahl von Verteilungselementen 1, die jeweils eine elektronische Schaltung 4, einen Verstärker 6 und an sich bekannte Mittel 7 enthalten, die den Verstärker 6 überbrücken, wenn dieser zum Beispiel mangels Speisespannung außer Funktion ist

Weiterhin weist das in Figur 1 dargestellte Verteilungssystem Benutzersteckdosen 12 auf, die ebenfalls jeweils eine elektronische Schaltung 4, einen Verstärker 6 und die Mittel 7 enthalten, die den Verstärker 6 überbrücken, wenn dieser außer Funktion ist

An jede Benutzersteckdose ist mindestens ein Benutzerendgerät TUS anschließbar (Netzausgang RO1), beispielsweise ein Fernsehgerät, ein Videogerät oder ein Decoder-Gerät.

Externe Spannungsquellen 8 sind mit in den Benutzersteckdosen 12 integrierten Verstärkern verbunden. Die externen Spannungsquellen 8 sind gegebenenfalls auch an die Benutzerendgeräte TUS anschließbar (gestrichelte Linie).

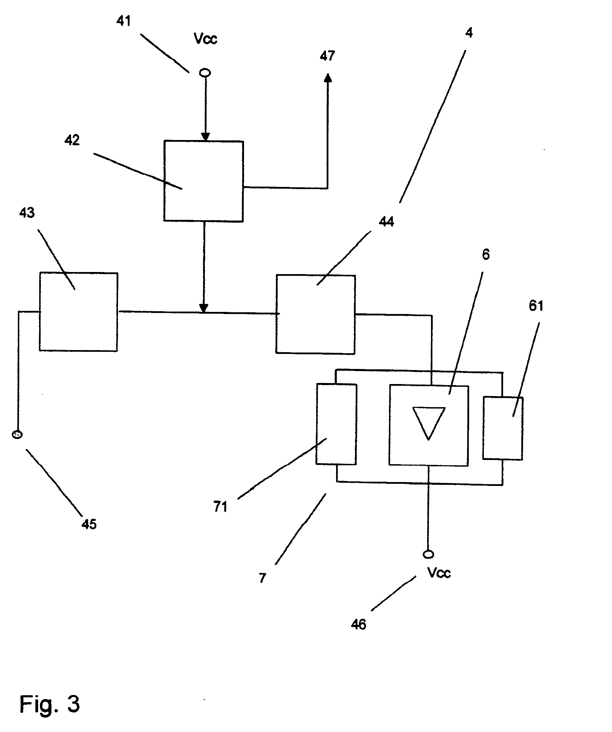

Die Benutzerendgeräte TUS können direkt mit den Verteilungselementen 1 verbunden sein, um diesen Speisespannung V (V_{cc} in Figur 3) zuzuführen.

Das Verteilungssystem kann ein Verteilungselement 1 oder mehrere Verteilungselemente 1 mit einer elektronischen Schaltung 4 und Verstärker 6 aufweisen; ebenso kann das Verteilungssystem eine Benutzersteckdose 12 oder mehrere Benutzersteckdosen 12 mit einer elektronischen Schaltung 4 und Verstärker 6 aufweisen

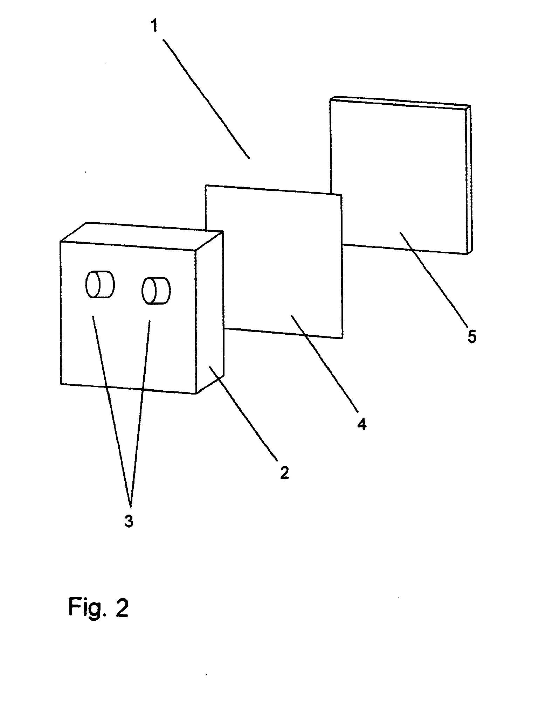

Wie in Figur 2 dargestellt, besteht das Verteilungselement 1 aus einem Chassis 2, in dem zwei Verbindungs-Elemente 3 angeordnet sind, aus einer elektronischen Schaltung 4, die in Figur 2 durch eine Schaltungsplatine dargestellt ist, und aus einer Abdeckung oder einem Verschluss 5.

Figur 3 zeigt ein Blockschaltbild der elektronischen Schaltung 4 des Verteilungselements 1 gemäß der Erfindung. Die elektronische Schaltung 4 besteht aus einem Eingang 41, einer optionaler Ableit-Einrichtung 42, zwei Bandpassfiltern 43, 44, einem Verstärker 6 mit einem Ausgang 46, einem Ausgang 45 (Verbindung zu den Verbindungselementen 3 in Figur 2) und einem Ausgang 47 zu einem anderen Verteilungselement.

Über den Schaltungs-Eingang 41 gelangen Telekommunikationssignale von mindestens einem Telekommunikationsnetz in das Verteilungssystem.

Die sogenannte optionale Ableit-Einrichtung 42 leitet einen Teil des Eingangssignals in die Schaltung 4 und einen anderen Teil des Eingangssignals über den Ausgang 47 zurück in das Netz. Die Schaltung 4 kann auch ohne Ableit-Einrichtung 42 ausgestaltet sein. In diesem Fall wird das Gesamt-Telekommunikation-Eingangssignal von der Schaltung 4 bearbeitet.

Sogenannte Zwischen-Verteilungselemente enthalten das Schaltungselement 42, während sogenannte Endbereichs-Verteilungselemente das Schaltungselement 42 nicht enthalten.
Die beiden Bandpaß-Filter 43 und 44, deren Durchgangsbänder entsprechend der Benutzung der Benutzersteckdosen gesteuert werden können, teilen die Eingangssignale in zwei Bänder, zum Beispiel in ein erstes Band zwischen 470 und 865 MHz und in ein zweites Band zwischen 950 y 2400 MHz.

Diese Bandteilung erfolgt nicht in allen Fällen. Abweichend hierzu kann vorgesehen sein, dass das Signal am Ausgang eines Verteilungselements (Ableiter) direkt dem Verstärker 6 mittels nur eines Hochpasses oder eines Tiefpasses zugeführt wird.
Der Ausgang des Filters 43 ist direkt mit dem Ausgang 45 der Schaltung 4 verbunden, welcher mit einem der Verbindungselemente 3 des Verteilungselements 1 galvanisch verbunden ist. Der Ausgang des Filters 44 ist mit dem Eingang des Verstärkers 6 verbunden, der das Signal verstärkt und das verstärkte Signal am Ausgang 46 der Schaltung 4 abgibt.

Der Verstärker 6 kann eine automatische Gewinnsteuerung 61 aufweisen, die den Pegel des Signals am Ausgang 46 konstant hält, und zwar unabhängig von Pegel des Signals am Eingang der Schaltung 4.

Bei einem Ausfall des Verstärkers 6 (zum Beispiel Ausfall eines Schaltungselements) oder bei Nichtspeisung des Verstärkers 6 kommen an sich bekannte Schaltungsmittel 7 zum Einsatz. Diese sind dem in Figur 3 dargestellten Ausführungsbeispiel parallel zum Verstärker 6 geschaltet und weisen zum Beispiel ein Durchgangs-Element 71 auf, zum Beispiel eine Leiterbahn, die einen Weg niedriger Impedanz bildet. Dieses Durchgangs-Element 71 überbrückt den Verstärker 8, wenn dieser ausfällt; und ermöglicht, dass in diesem Fall die Signale über das Durchgangs-Element 71 zu dem Ausgang 46 übertragen werden.

Der Schaltungsausgang 46 der elektronischen Schaltung 4 ist galvanisch mit einem der Verbindungselemente 3 (Figur 2) des Verteilungselements 1 verbunden.

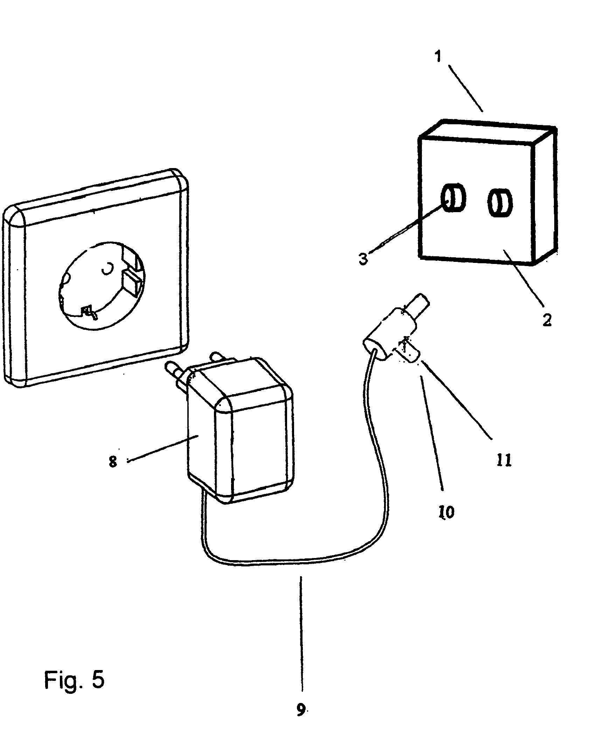

Es kann vorgesehen sein, dass der Verstärker 6 durch ein Spannungssignal Vcc gespeist wird, das über den Anschluss 46 von einem Benutzerendgerät zugeführt wird. Weiterhin kann vorgesehen sein, dass der Verstärker 6 durch ein Spannungssignal Vcc einer externen Spannungsquelle (8 in den Figuren 1 und 5) zum Beispiel über den Eingang 46 gespeist wird.

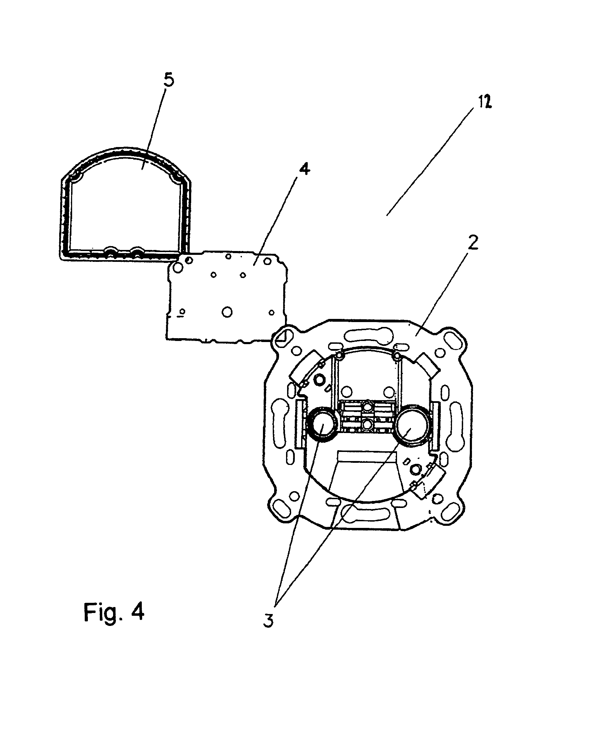

Figur 4 zeigt eine Benutzersteckdose 12 mit einem Chassis 2, zwei Verbindungs-Steckelementen 3, aus einer elektronischen Schaltung 4, die durch eine Schaltungsplatine dargestellt ist, und aus einer Abdeckung oder einem Verschluss 5.

Figur 5 zeigt ein Verteilungselement 1 und eine externe Spannungsquelle 8. Diese weist ein Versorgungskabel 9 mit einem Stecker 10 auf, der in ein Verbindungselement 3 des Verteilungselements 1 eingesteckt wird. Der Stecker 10 kann ein Ausgangs-Element 11 aufweisen, über das Signale vom Verbindungselement 3 einem Benutzerendgerät (TUS in Figur 1) zugeführt werden, wenn das Verteilungselement eine Benutzersteckdose (12 in Figur 1) ist.

Ist dagegen das Verteilungselement 1 zum Beispiel ein Verteiler, so werden über das Ausgangs-Element 11 des Steckers 10 Signale vom Verbindungselement 3 dem Netz zugeführt.

Der Stecker 10 ist in der Weise ausgestaltet, dass Strom aus der externen Spannungsquelle 8 nur zu dem Verteilungselement 1 geleitet wird, nicht dagegen zu einem Benutzerendgerät oder in das Netz.
Alternativ kann der Stecker 10 in der Weise ausgestaltet sein, dass Strom aus der externen Spannungsquelle 8 auch zu einem Benutzerendgerät geleitet wird (Figur 1: gestrichelte Line von 8 nach TUS).

Die Erfindung betrifft auch ein vorstehend beschriebenes Verteilungselement 1 sowie eine vorstehend beschriebene Benutzersteckdose 12.

Das Verteilungselement 1 und die Benutzersteckdose 12 weisen jeweils eine elektronische Schaltung 4 mit einem Verstärker 6 auf, der Telekommunikationssignale verstärkt..Weiterhin weist die elektronische Schaltung 4 an sich bekannte Mittel 7 auf, die in der Weise ausgestaltet sind, dass sie den Verstärker überbrücken und Telekommunikationssignale durchschalten, wenn dieser außer Funktion ist (z.B. keine Speisespannung, betriebstechnischer Ausfall).

### Bezugszeichen

- 1: Verteilungselement Verteiler, Abzweigelement (Shunt), Koppler, Benutzersteckdose (12)
- 2: Chassis
- 3: Verbinder, Stecker
- 4: Elektronische Schaltung
- 41: Eingang
- 42: Schaltung für optionale Umleitung
- 43,44: Bandpaß
- 45, 46: Benutzerausgang
- 47: Umleitungsausgang
- 5: Deckel, Verschluss
- 6: Verstärker
- 61: Automatische Gewinnsteuerung
- 7: Mittel
- 71: Durchgangs-Element, Leiterbahn niedriger Impedanz
- 8: externe Speisequelle
- 9: Speisekabel
- 10: Stecker, Verbinder
- 11: Ausgang
- 12: Benutzersteckdose
- MATV/SMATV: Netz
- RJ1, RJ2: Eingang des Netzes
- RO1: Ausgang des Netzes
- TUS: Benutzerendgerät
- V, V_{cc}: Speisespannung

## Patentansprüche

**1.** Verteilungssystem für ein Telekommunikationsnetz, insbesondere ein MATV/ SMATV-Netz, das Telekommunikationssignale an Benutzersteckdosen (12), insbesondere Steckdosen für den Anschluss eines Fernseh-, Video- und/oder Decoder-Geräts (TUS), überträgt, mit wenigstens einem Verteilungselement (1) mit einer elektronischen Schaltung (4),
**dadurch gekennzeichnet,**
**dass** die elektronische Schaltung (4) des Verteilungselements (1) einen Verstärker (6) aufweist, der Telekommunikationssignale des Telekommunikationsnetzes verstärkt.

**1.** Verteilungssystem nach Anspruch 1, **dadurch gekennzeichnet, dass** die elektronische Schaltung (4) Mittel (7) aufweist, die in der Weise ausgestaltet sind, dass sie die Telekommunikationssignale an die Benutzersteckdosen (12) übertragen, sofern der Verstärker (6) außer Funktion ist.

**3.** Verteilungssystem nach Anspruch 2, **dadurch gekennzeichnet, dass** die Mittel (7) ein Durchgangs-Schaltungselement (71) der elektronischen Schaltung (4) bilden, dass das Durchgangs-Schaltungselement (71) einen Weg niedriger Impedanz zwischen einem Eingang und einem Ausgang der elektronischen Schaltung (4) bildet, über den die Telekommunikationssignale übertragen werden, sofern der Verstärker (6) außer Funktion ist.

**4.** Verteilungssystem nach einem der vorstehenden Ansprüche, **dadurch gekennzeichnet, dass** der Verstärker (6) eine automatische Gewinnsteuerung (61) aufweist.

**5.** Verteilungssystem nach einem der vorstehenden Ansprüche, **dadurch gekennzeichnet, dass** der Verstärker (6) mit einem Benutzerendgerät (TUS) verbunden ist, das dem Verstärker (6) Speisespannung (V, V_{cc}) zuführt.

**6.** Verteilungssystem nach einem der vorstehenden Ansprüche, **dadurch gekennzeichnet, dass** der Verstärker (6) mit einer externen Speisequelle (8) verbunden ist, die dem Verstärker (6) Speisespannung (V, V_{cc}) zuführt.

**7.** Verteilungssystem nach Anspruch 6, **dadurch gekennzeichnet, dass** das Benutzerendgerät (TUS) mit der externen Speisequelle (8) verbunden ist, die dem Benutzerendgerät (TUS) Speisespannung (V, V_{cc}) zuführt.

**8.** Verteilungselement (1) für ein Verteilungssystem nach einem der vorstehenden Ansprüche, **dadurch gekennzeichnet, dass** es eine elektronische Schaltung (4) mit einem Verstärker (6) aufweist, der Telekommunikationssignale des Telekommunikationsnetzes verstärkt.

**9.** Verteilungselement (1) nach Anspruch 8, **dadurch gekennzeichnet, dass** die elektronische Schaltung (4) Mittel (7) aufweist, die in der Weise ausgestaltet sind, dass sie die Telekommunikationssignale an die Benutzersteckdosen (12) übertragen, sofern der Verstärker (6) außer Funktion ist.

**10.** Verteilungselement (1) nach Anspruch 8 oder 9, **dadurch gekennzeichnet, dass** es ein Verteiler, ein Abzweig-Element, ein Koppler oder eine Benutzersteckdose (12) ist.

**11.** Benutzersteckdose (12) für ein Verteilungssystem nach einem Ansprüche 1 bis 7, **dadurch gekennzeichnet, dass** sie eine elektronische Schaltung (4) mit einem Verstärker (6) aufweist, der Telekommunikationssignale des Telekommunikationsnetzes verstärkt.

**12.** Benutzersteckdose (12) nach Anspruch 11, **dadurch gekennzeichnet, dass** sie Mittel (7) aufweist, die in der Weise ausgestaltet sind, dass sie den Verstärker (6) überbrücken und die Telekommunikationssignale durchschalten, sofern der Verstärker (6) außer Funktion ist.
